(19) Europäisches Patentamt

European Patent Office

Office européen des brevets

(11) Veröffentlichungsnummer : **0 252 161 B1**

(12) **EUROPÄISCHE PATENTSCHRIFT**

(45) Veröffentlichungstag der Patentschrift :
07.08.91 Patentblatt 91/32

(51) Int. Cl.⁵ : **B01D 29/11, B01D 29/50**

(21) Anmeldenummer : 87900738.3

(22) Anmeldetag : 17.12.86

(86) Internationale Anmeldenummer :
PCT/SU86/00130

(87) Internationale Veröffentlichungsnummer :
WO 87/03821 02.07.87 Gazette 87/14

(54) **Vorrichtigung zum Reinigen, insbesondere Filtern, von Flüssigkeiten oder Gasen.**

(30) Priorität : 24.12.85 SU 3988607

(43) Veröffentlichungstag der Anmeldung :
13.01.88 Patentblatt 88/02

(45) Bekanntmachung des Hinweises auf die
Patenterteilung :
07.08.91 Patentblatt 91/32

(84) Benannte Vertragsstaaten :
AT DE FR GB IT

(56) Entgegenhaltungen :
GB-A- 350 509
US-A- 4 202 769

(73) Patentinhaber : **TREST 'JUZHVODOPROVOD'**
ul. Gagarina, 135/1
**Krasnodar, 350049 (SU)**

(72) Erfinder : **SHISHKIN, Viktor Vasilievich**
ul. Festivalnaya, 16-5
**Krasnodar, 350049 (SU)**
Erfinder : **KRYAZHEVSKIKH, Nikolai**
**Fedorovich**
ul. Krasnykh partizan, 559-13
**Krasnodar, 350049 (SU)**
Erfinder : **SHAPOVALOV, Jury Petrovich**
ul. Turgeneva, 18
**Krasnodar, 350049 (SU)**

(74) Vertreter : **Finck, Dieter et al**
**Patentanwälte v. Füner, Ebbinghaus, Finck**
**Mariahilfplatz 2 & 3**
**W-8000 München 90 (DE)**

# Beschreibung

Die Erfindung betrifft eine Vorrichtung zum Reinigen, insbesondere Filtern, von Flüssigkeiten oder Gasen.

Die Vorrichtung ist besonders für eine Beseitigung von Festteilchen in chemischen Produkten, für eine Trink- und Umlaufwasserreinigung, für eine Reinigung von Industrieabwässern, für eine Wasserentschlammung sowie für eine Luftentstaubung geeignet.

Außerdem kann sie zur Entfernung chemischer Einschlüsse bei einer Flüssigkeits- oder Gasreinigung sowie bei einer Luftoder Gastrocknung verwendet werden.

Aus dem SU-A-79 522 ist eine Vorrichtung zum Filtern eines leichtflüssigen Mediums bekannt, deren ansonsten dichtes Gehäuse mit einer schlitzförmigen Öffnung versehen ist, durch die als Filterelement ein endloses Filtrierband bewegt wird. Das Gehäuse steht in seinem oberen Bereich mit der Zuführeinrichtung in Verbindung, während die Ableiteinrichtung an den unteren Bereich angeschlossen ist. Da das Gehäuse aufgrund des durchlaufenden Filtrierbandes nicht vollkommen geschlossen werden kann, ist der Druck in seinem Hohlraum begrenzt. Zudem verschleißt das Filtrierband durch den an der schlitzförmigen Öffnung anhaftenden und erstarrenden Rückstand, der das Filtrierband abreibt.

Der Erfindung liegt daher die Aufgabe zugrunde, ausgehend vom gattungsgemäßen Stand der Technik eine Vorrichtung zum Filtern eines leichtflüssigen Mediums zu schaffen, die einen hohen Wirkungsgrad bei weitgehend reduziertem Verschleiß des Filterelements hat.

Diese Aufgabe wird erfindungsgemäß dadurch gelöst, daß das Filterelement toroidförmig ist und daß das Gehäuse druckdicht geschlossen, ringförmig ausgebildet und mit zwei Absperrschiebern versehen ist, die den Hohlraum des Gehäuses in zwei Abschnitte unterteilen, von denen der eine mit der Zuführeinrichtung und der Ableiteinrichtung in Verbindung steht, während der andere mit der Reinigungseinrichtung und der Abführeinrichtung verbunden ist.

Da das Gehäuse druckdicht ausgeführt ist, kann das zu filtrierende Medium mit hohem Druck in den Hohlraum des Gehäuses eingebracht werden, so daß der Wirkungsgrad der Vorrichtung hoch ist. Das Filterelement kann durch seine Toroidform im Hohlraum des Gehäuses abrollen, so daß es keinem wesentlichen Verschleiß ausgesetzt ist. Die Vorrichtung kann kontinuierlich betrieben werden. Da das Gehäuse geschlossen und druckdicht ist, ist es auch möglich, giftige oder übelriechende Stoffe zu filtern, ohne daß diese Stoffe ins Freie austreten können.

Ein Ausführungsbeispiel der Erfindung wird nachstehend anhand einer Zeichnung, die eine Vorrichtung zum Filtern eines leicht flüssigen Mediums zeigt, näher erläutert.

Die Vorrichtung hat ein druckdichtes ringförmiges hohles Gehäuse 1, in dessen Hohlraum mehrere bewegbare biegsame toroidförmige Filterelemente 2 angeordnet sind. Die Anzahl der Filterelemente 2 wird je nach der Art des leichtflüssigen Mediums und des erforderlichen Reinigungsgrades gewählt. Jedes Filterelement 2 kann z.B. ein Sieb 3 sein, das mit einem Filtermittel 4, wie Sand, Chemiefaserabfälle, Watte, technischer Filz, beliebiges chemisches Reagenz oder Adsorptionsmittel, gefüllt ist.

Im Hohlraum des Gehäuses 1 befinden sich ein erster und ein zweiter Absperrschieber 5a bzw. 5b, die den Hohlraum in zwei Abschnitte 6, 7 unterteilen. Der eine Abschnitt 6 ist über einen Stutzen 8 und ein Ventil 9 mit einer Zuführeinrichtung 10 für zu reinigendes Medium und über einen Stutzen 11 und ein Ventil 12 mit einer Ableiteinrichtung 13 für gereinigtes Medium verbunden. Der andere Abschnitt 7 des Hohlraums des Gehäuses 1 steht über einen Stutzen 14 und ein Ventil 15 mit einer Reinigungseinrichtung 16 für das Filterelement 2 und über einen Stutzen 17 und ein Ventil 18 mit einer Abführeinrichtung 19 für den Rückstand in Verbindung.

Vor den Absperrschiebern 5a, 5b sind im Gehäuse 1 mit den Absperrschiebern 5a, 5b elektrisch verbundene Endschalter (nicht dargestellt) angeordnet.

Für ein Filtern eines leichtflüssigen Mediums wird dieses mit Hilfe der Zuführeinrichtung 10 unter Druck über das Ventil 9 und den Stutzen 8 in einen Abschnitt 6 des Hohlraums des Gehäuses 1 gefördert. Das zu filternde Medium beginnt dabei das Filterelement 2 zu verschieben. Das Filterelement 2 bewegt sich abwälzend auf den anderen Abschnitt 7 des Hohlraumes des Gehäuses 1 zu. Das leichtflüssige zu filternde Medium fließt dabei durch das Filterelement 2 und wird vom Rückstand (oder Staub) befreit, der in dem Filterelement 2 zurückgehalten wird. Das gefilterte Medium wird vor dem Filterelement 2 mit Hilfe der Ableiteinrichtung 13 über das Ventil 12 und den Stutzen 11 ständig abgeleitet. Beim Heranrücken des Filterelements 2 an den ersten Absperrschieber 5a betätigt das Filterelement 2 einen entsprechenden Endschalter, woraufhin der Absperrschieber 5a einen Befehl zum Öffnen erhält. Er öffnet sich daraufhin und läßt das Filterelement 2 in den anderen Abschnitt 7 des Hohlraumes des Gehäuses 1 durch, wonach sich der erste Absperrschieber 5a schließt.

Nachdem das Filterelement 2 vor der Reinigungseinrichtung 16 angelangt ist, öffnet sich das Ventil 15, und das Spülwasser wird über den Stutzen 14 dem Filterelement 2 unter Druck zugeführt. Gleichzeitig öffnet sich das Ventil 18, und das Spülwasser wird zusammen mit dem Rückstand mit Hilfe der Abführeinrichtung 19 über den Stutzen 17 von dem Filterelement 2 abgeführt.

Nach Abschluß der Spülung des Filterelements 2 bewegt sich das Filterelement 2 auf den zweiten Absperrschieber 5b zu. Beim Heranrücken an den zweiten Absperrschieber 5b betätigt das Filterelement 2 den entsprechenden Endschalter. Der zweite Absperrschieber 5b öffnet sich, und das Filterelement 2 tritt aus dem anderen Abschnitt 7 in den einen Abschnitt 6 des Hohlraums ein und betätigt dabei einen weiteren Endschalter, wonach sich der zweite Absperrschieber 5b schließt. Der Arbeitszyklus der Vorrichtung wiederholt sich.

Als Betriebssteuerungssystem für die Absperrschieber 5a, 5b kann eine beliebige bekannte Schaltung verwendet werden.

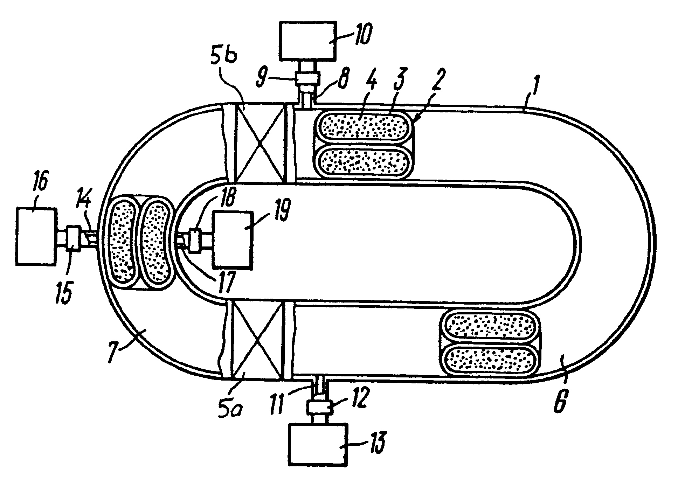

## Patentansprüche

1. Vorrichtung zum Reinigen, insbesondere Filtern, von Flüssigkeiten oder Gasen mit einen ringförmigen, druckdichten und geschlossenen Gehäuse (1), das durch zwei Absperrschieber (5a, 5b) in zwei Abschnitte (6, 7) unterteilt ist, wobei im Anfangsbereich des einen Abschnitts (6) die Zuführeinrichtung (10) für das zu reinigende Medium und in seinem Endbereich die Ableiteinrichtung (13) für das gereinigte Medium angeordnet sind, im Gehäuse (1) mindestens ein toroidförmiges Reinigungselement (2) vorhanden ist, das an der Innenseite des Gehäuses (1) abrollend bewegbar ist, und eine Reinigungseinrichtung (16) für das Reinigungselement (2) im anderen Abschnitt (7) vorgesehen ist.

## Claims

1. A device for the purification, in particular filtration, of liquids or gases with an annular, pressure-tight and closed housing (1) which is subdivided by two slide valves (5a, 5b) into two portions (6,7), the feed device (10) for the medium to be purified being arranged in the starting region of one portion (6) and the removal device (13) for the purified medium being arranged in its end region, at least one toroidal purifying element (2), which is movable in a rolling manner on the inside of the housing (1), being present in the housing (1), and a purifying device (16) for the purifying element (2) being provided in the other portion (7).

## Revendications

1. Dispositif pour la purification, en particulier le filtrage, de liquides ou de gaz, avec un boîtier annulaire, étanche à la pression et clos (1), qui est subdivisé par deux vannes d'arrêt (5a, 5b) en deux tronçons (6, 7) auquel cas le système d'amenée (10) pour le milieu à purifier est disposé dans la zone de commencement de l'un (6) des tronçons et le système de départ (13) pour le milieu purifié est disposé dans sa zone extrême et dans le boîtier (1) existe au moins un élément de nettoyage toroïdal (2) qui est mobile par roulement sur la face interne du boîtier (1) et un système de nettoyage (16) pour l'élément de purification (2) est prévu dans l'autre tronçon (7).